# EUROPEAN PATENT APPLICATION

(11) **EP 1 580 549 A2**
(43) Date of publication of application: **28.09.2005**
(21) Application number: 05006663.8
(22) Date of filing: 24.03.2005
(51) Int. Cl.: G01N 30/64

(54) **Process for producing chemical product and quality inspection process for chemical used in same**

(30) Priority: 26.03.2004 JP 2004092255
(71) Applicant: FUJI PHOTO FILM CO., LTD., Kanagawa (JP)
(72) Inventor: Hirano, Katsumi, Minamiashigara-shi, Kanagawa (JP); Hayashi, Hidetoshi, Minamiashigara-shi, Kanagawa (JP); Ando, Kenji, Minamiashigara-shi, Kanagawa (JP)
(74) Representative: HOFFMANN EITLE

(57) **Abstract**

A process for producing a chemical product from one or more chemicals is provided. The process includes a step of determining in advance a maximum permissible amount of an impurity peak and/or a minimum permissible amount of an effective component peak under given analytical conditions for at least one of the chemicals by means of liquid chromatography employing an electrochemical detector having a conductive diamond electrode, and a step of determining the usability of a lot of the chemical by subjecting the lot to a measurement by liquid chromatography under the above-mentioned analytical conditions based on an amount of the impurity peak and/or an amount of the effective component peak of the lot. There is also provided a quality inspection process for a chemical.

## Description

The present invention relates to a process for producing a chemical product. The present invention also relates to a production process, an inspection process, a shipping process, and an acceptance process for a chemical.

Silver halide photosensitive materials (hereinafter, also simply called 'photographic materials') are used in many fields in various forms, and there are a wide range of these products. Photographic materials employ silver halide grains as the photosensitive element regardless of whether it is a black and white photographic material or a color photographic material, and whether it is a negative type or a reversal type. When a photographic material is used for recording, a latent image is only formed in silver halide grains that are exposed to radiation, such as visible light, and a target image is formed by imagewise developing the latent image by an oxidation-reduction reaction using the silver halide as an oxidizing agent according to the amount of latent image formed. In black and white photographic materials an image is formed by silver formed by the imagewise reduction of silver halide, and in color photographic materials an image is formed from an image dye generated by color development or a diffusion dye that has imagewise separated from a color material.

In order to impart to the silver halide photosensitive material a practically sufficient raw stock shelf life and obtain a stable target image, the photographic material may contain, in addition to image-forming materials such as a silver halide emulsion and a dye precursor (coupler) or a coloring material, a large number of additives as photographic raw materials. Many of the additives are organic compounds, and according to the intended function various types are used, such as chemical sensitizers, physical sensitizers, spectral sensitizers, antifoggants, antioxidants, and stabilizers. In general, the variety of photographic raw materials used increases in the order black and white photographic materials, color photographic materials, and instant color photographic materials, and a few tens of types of raw materials are used for one photographic material. Since different photographic raw materials are used for different types of photographic materials, a production factory for photographic materials uses nearly 1000 types of photographic raw materials, and a large amount of effort is always expended to ensure stable production by inspecting the quality of all photographic raw materials so as to prevent any production faults.

For quality assurance of photographic raw materials, in addition to physical and chemical inspections by a raw material supplier, utility tests by a photographic material producer are essential in many cases. These utility tests include proprietary physical and chemical tests of the photographic company, but are mainly based on a so-called 'photographic property test'. The photographic property test is a small-scale photographic material production test, and is a traditional method in which a photographic material is produced using a test raw material by a small coater that has a narrower width than a production machine, and the photographic characteristics of the photographic material are evaluated to determine whether or not the photographic raw material has the necessary quality. This photographic property test is a reliable test method, but is a labor and time consuming inspection process that requires the actual production of a photosensitive material in a darkroom, development, and evaluation thereof.

An examination has been carried out into whether or not the photographic property test for photographic raw materials can be replaced by appropriate physical and chemical tests, but for many photographic raw materials no test method has been found that has sufficient detection sensitivity and detection stability for impurities.

Pharmaceuticals, agrochemicals, cosmetics, etc. are products containing various chemical materials (chemicals). When developing and producing such products, it is necessary to test the biological safety of these chemicals, for example, whether of not they cause an allergic reaction. Conventionally, for example, as a method for testing skin sensitization there is a known method (Maximization Test, Buehler Test, etc.) involving percutaneous administration of a test material to a laboratory animal and observation of a skin reaction on the administered site, or a known method involving percutaneous administration of a test material to a laboratory animal and examination of lymphocyte proliferation (Local Lymph Node Assay). However, such test methods require complicated operations such as administration of a test material to a laboratory animal and skin observation or a blood test in addition to the breeding of laboratory animals, and also require time to carry out. It is therefore difficult to carry out quality assurance of a chemical for every lot that is used in practice.

Recently, an electrochemical measurement using a boron-doped conductive diamond electrode has been disclosed (JP-A-2001-21521, JP-A-2001-50924, JP-A-2001-14721 1, JP-A-2002-189016, and JP-A-2002-310977 (JP-A denotes a Japanese unexamined patent application publication)). More specifically, a case in which an analyte is analyzed as a metal or an alloy by voltammetry employing a diamond electrode (JP-A-2001-21521), a case in which histamine is analyzed using a flow cell employing a diamond electrode (JP-A-2001-50924), a case in which uric acid is measured using a diamond electrode that has been subjected to anodization (JP-A-2001-147211), a case in which a thiol is analyzed using a diamond electrode (JP-A-2002-189016), and a case in which a glucose concentration is measured using a diamond electrode (JP-A-2002-310977) have been disclosed.

There are also scientific reports concerning the electrochemical oxidation of NADH (dihydronicotinamide adenine dinucleotide) and uric acid detection using a diamond electrode (T. N. Rao, I. Yagi, T. Miwa, D. A. Tryk and A. Fujishima, Ana. Chem. 1999, 71, 2506-2511, and Elena Popa, Y. Kubota, D. A. Tryk and A. Fujishima, Ana. Chem. 2000, 72, 1724-1727).

An object of the present invention is to produce a silver halide photosensitive material using a quality assured photographic raw material without relying on the above-mentioned 'photographic property test', that is, without relying on a small-scale production test. Another object of the present invention is to produce a quality assured pharmaceutical, agrochemical, or cosmetic without relying on an animal test.

Other objects of the present invention will become apparent from a disclosure of the invention below.

One object of the present invention has been accomplished by a process for producing a chemical product from one or more chemicals, the process comprising a step of determining in advance a maximum permissible amount of an impurity peak and/or a minimum permissible amount of an effective component peak under given analytical conditions for at least one of the chemicals by means of liquid chromatography employing an electrochemical detector (ECD) having a conductive diamond electrode, and a step of determining the usability of a lot of the chemical by subjecting the lot to a measurement by liquid chromatography under the above-mentioned analytical conditions based on an amount of the impurity peak and/or an amount of the effective component peak of the lot.

Another object of the present invention has been accomplished by a process for producing a chemical, the process comprising a step of determining in advance a maximum permissible amount of an impurity peak and/or a minimum permissible amount of an effective component peak by liquid chromatography employing an electrochemical detector having a conductive diamond electrode under given analytical conditions for the chemical, and a step of subjecting the chemical to a measurement by liquid chromatography under the above-mentioned analytical conditions, wherein a step of a synthetic reaction and/or purification of the chemical is controlled based on an amount of the impurity peak and/or an amount of the effective component peak of the chemical.

Yet another object of the present invention has been accomplished by a quality inspection process for a chemical, the quality inspection process comprising a step of preparing a conductive diamond electrode and a counter electrode, a step of subjecting the chemical to liquid chromatography so as to separate and elute a component, a step of contacting the component eluted by liquid chromatography with the conductive diamond electrode and the counter electrode, a step of applying a voltage for causing an oxidation reaction between the conductive diamond electrode and the counter electrode, and a step of measuring a current at said voltage.

A process for producing a photographic material is explained as an example; since a raw material whose quality has been assured without relying on a so-called coating test is used, the production efficiency is excellent, and high quality photographic raw materials and photosensitive materials are obtained in a stable manner. With regard to pharmaceuticals, agrochemicals, and cosmetics, by use of a raw material whose quality has been assured by a test that can replace or supplement an animal test, a safe product can be provided efficiently. The present invention may be applied to the production of other chemical products. Furthermore, the present invention may be applied to a process for producing a chemical.

FIG. 1A is a schematic sectional view of one structural example of a diamond electrode 1, which comprises a substrate 2 and a conductive diamond film 3 formed on the substrate 2. FIG. 1 B is a schematic perspective view of the diamond electrode 1.

FIG. 2A shows one example of a chromatogram obtained by an electrochemical detector (ECD) connected to a high-performance liquid chromatograph (HPLC) used in the present invention. FIG. 2B is a chromatogram obtained by a UV detector connected to the same HPLC as a comparative example.

FIG. 3A is one example of a chromatogram obtained by an electrochemical detector (ECD) connected to a high-performance liquid chromatograph (HPLC) used in the present invention. FIG. 3B is a chromatogram obtained by a UV detector connected to the same HPLC as a comparative example.

FIG. 4A is one example of a chromatogram obtained by an electrochemical detector (ECD) connected to a high-performance liquid chromatograph (HPLC) used in the present invention. FIG. 4B is a chromatogram obtained by a UV detector connected to the same HPLC as a comparative example.

FIG. 5A is one example of a chromatogram of a water extract (A) of UV-2 containing a component that degrades the photographic sensitivity, obtained by an electrochemical detector (ECD) connected to a high-performance liquid chromatograph (HPLC) used in the present invention. FIG. 5B is a chromatogram of a water extract (B) of UV-2 that does not degrade the photographic sensitivity.

FIG. 6A is one example of a chromatogram of unpurified crystals (A) of CP-2 containing a component that degrades the photographic sensitivity, obtained by an electrochemical detector (ECD) connected to a high-performance liquid chromatograph (HPLC) used in the present invention. FIG. 6B is a chromatogram of standard CP-2 (B) from which the component that degrades the photographic sensitivity has been removed by purification.

FIG. 7A is one example of a chromatogram obtained by an electrochemical detector (ECD) connected to a high-performance liquid chromatograph (HPLC) used in the present invention. FIG. 7B is a chromatogram obtained by a UV detector connected to the same HPLC as a comparative example.

The process of the present invention for producing a chemical product from one or more chemicals comprises a step of determining in advance a maximum permissible amount of an impurity peak and/or a minimum permissible amount of an effective component peak under given analytical conditions for at least one of the chemicals by means of liquid chromatography employing an electrochemical detector having a conductive diamond electrode, and a step of determining the usability of a lot of the chemical by subjecting the lot to a measurement by liquid chromatography under the above-mentioned analytical conditions based on an amount of the impurity peak and/or an amount of the effective component peak of the lot.

The chemical product referred to in the present invention is a product that is formed from one or more chemical materials (chemicals). The chemical product includes pharmaceuticals and agrochemicals that contain substantially a single effective component, and cosmetics and photographic materials that are compositions of a large number of chemicals.

The present invention relates to a process for producing a chemical product using a raw material whose quality has been inspected by liquid chromatography employing an electrochemical detector having a conductive diamond electrode.

As a representative example, the present invention relates to a process for producing a silver halide photosensitive material using a photographic raw material whose quality has been inspected by liquid chromatography employing as a detector an electrochemical detector having a conductive diamond electrode. The present invention may also be applied to the production of pharmaceuticals, agrochemicals, and cosmetics.

Furthermore, the process for producing a chemical of the present invention comprises a step of determining in advance a maximum permissible amount of an impurity peak and/or a minimum permissible amount of an effective component peak by liquid chromatography employing an electrochemical detector having a conductive diamond electrode under given analytical conditions for the chemical, and a step of subjecting the chemical to a measurement by liquid chromatography under the above-mentioned analytical conditions, wherein a step of a synthetic reaction and/or purification of the chemical is controlled based on an amount of the impurity peak and/or an amount of the effective component peak of the chemical.

Another aspect of the present invention relates to a quality inspection process for a chemical, the quality inspection process comprising a step of preparing a conductive diamond electrode and a counter electrode, a step of subjecting a chemical to liquid chromatography so as to separate and elute a component, a step of contacting the component eluted by liquid chromatography with the conductive diamond electrode and the counter electrode, a step of applying a voltage for causing an oxidation reaction between the conductive diamond electrode and the counter electrode, and a step of measuring a current at said voltage.

Furthermore, the above-mentioned quality inspection process preferably comprises a step of determining in advance a maximum permissible amount of an impurity peak and/or a minimum permissible amount of an effective component peak by liquid chromatography employing an electrochemical detector having a conductive diamond electrode under given analytical conditions for the chemical, and a step of subjecting a lot of the chemical to a measurement by liquid chromatography under the above-mentioned analytical conditions and determining the quality of the lot based on an amount of the impurity peak and/or an amount of the effective component peak of the lot.

The chemical referred to here includes a chemical material (raw material) constituting a chemical product, as well as a raw material (reactant) prior to a reaction, the raw material being used in a step of producing a chemical product (product), and a solvent used as a reaction solvent, etc.

The above-mentioned quality inspection includes a shipment inspection by a manufacturer of a chemical and an acceptance inspection by a producer of a chemical product using a raw material.

The conductive diamond electrode is a diamond electrode in which conductivity is imparted to diamond, which is originally an insulator, by doping it with an appropriate conductive dopant, and can be produced by a gas-phase synthetic method and, in particular, a chemical vapor-deposition (CVD) method employing plasma.

Examples of the conductive dopant include atoms of groups III and V; B, N, P, and As are preferable; among these, nitrogen (N) and boron (B) are more preferable, and B is particularly preferable. By doping with such an atom, a p-type semiconductor diamond or a metallic conductive diamond is obtained and can be used as an electrode. The conductivity may be controlled by the amount of doping, and it is preferable for the amount of the atom with which diamond is doped to be such that the resulting conductivity is on the order of 1 × 10⁻² to 10⁻⁶ Ωcm.

The diamond electrode may be formed by making a conductive diamond into an electrode without using a substrate as a support, but it is preferable to form a film of conductive diamond on a conductive substrate.

The diamond chemical vapor-deposition method is carried out by exciting a raw material gas, which is a mixture of a carbon source and hydrogen, with an excitation source, and supplying and depositing it onto a substrate.

The diamond electrode is an electrode to which conductivity is imparted by doping with a conductive atom such as boron during the course of chemical vapor-deposition (CVD). As the carbon source, an organic compound such as methane or methanol is used. Examples of the excitation source include a heated filament, microwaves, high frequency waves, direct current arc discharge, direct current glow discharge, combustion flame, etc., and microwaves are preferable.

The diamond film produced by the CVD method grows on the substrate in a polycrystalline state. Examples of the substrate include single crystal silicon, Mo, W, Nb, Ti, Fe, Au, Ni, Co, alumina, silicon carbide, and graphite, and a conductive silicon substrate may preferably be used. It is preferable for the silicon substrate to have a conductivity of about 0.1 Ωm or higher, and this can be obtained by doping with an appropriate conductive dopant when producing a silicon substrate.

One step of the CVD method is illustrated below, but a person skilled in the art may easily modify the step appropriately by reference to the non-patent publications cited above or documents cited therein.

It is preferable to mechanically polish the surface of a silicon substrate prior to the CVD step. Polishing the surface of a silicon (100) plane with, for example, a fine diamond powder having an average particle size of 0.5 µm enables the nuclear growth of diamond crystals to occur easily. This polished surface is washed with acetone. As the carbon source, an acetone/methanol (9:1 v/v) mixture is used, and B₂O₃ is dissolved in this mixture as a boron source at a B/C ratio of about 1 mol %. As a microwave CVD system, a microwave plasma chemical vapor-deposition system ('ASTeX') manufactured by Applied Science and Technology, Inc. (Woburn, Massachusetts, USA), etc. may be used. When the process is carried out under a pressure of 115 Torr of high purity hydrogen as a carrier gas at a substrate temperature of 800°C to 900°C with a microwave output of 5 kW for about 10 hours, polycrystalline diamond is deposited as a film having a thickness of about 40 µm. The resistance measured by a four-point probe method is 10⁻³ Ωcm. It can be confirmed from a Raman absorption spectrum at 1200 cm⁻¹ that boron doping has been carried out.

The thickness of the diamond film is not particularly limited, but a thickness of 1 to 100 µm, and preferably 5 to 50 µm, may be used.

The surface of the diamond film can be subjected to oxidation as necessary.

After the film of conductive diamond is formed on the conductive silicon substrate, an electrode is made by coating the back face of the electrode with titanium (Ti) and/or a conductive metal such as gold.

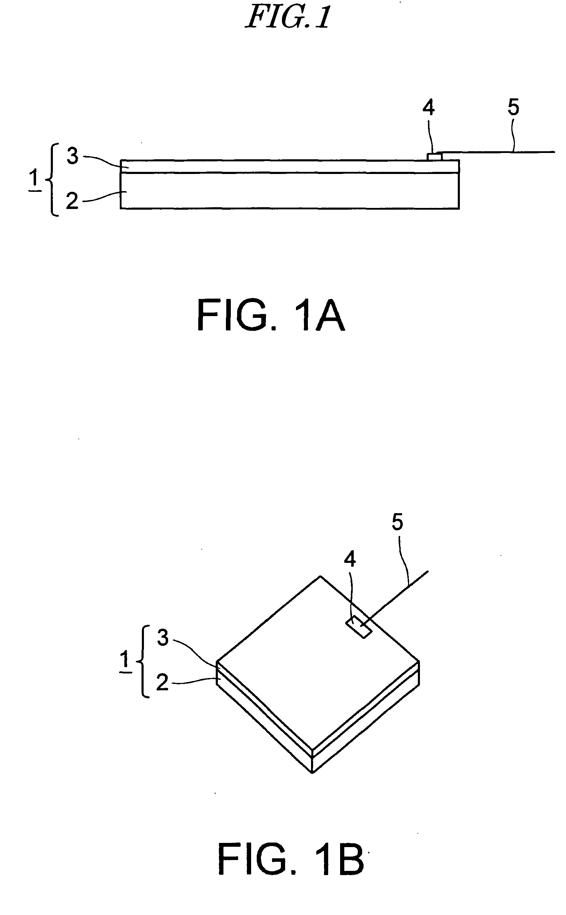

FIG. 1 shows schematically an example of the structure of the diamond electrode. FIG. 1A is a sectional view of a diamond electrode 1; this electrode comprises a substrate 2 and a conductive diamond film 3 formed thereon, and this conductive diamond film 3 is connected to a conductor 5 via, for example, a gold coating 4. FIG. 1 B is a perspective view of the diamond electrode 1, in which the conductive diamond film 3 is formed on the substrate 2, and this conductive diamond film 3 is connected to the conductor 5 via the gold coating 4 so as to provide an electrode.

The conductive diamond electrode is a relatively newly developed electrode, as seen in the patent publications and non-patent publications cited above, and can be used in cyclic voltammetry, a rotating disc electrode, amperometric measurement, etc. A representative electrochemical measurement used in the present invention is the amperometric measurement. In the present invention, the chromatography preferably employs an amperometric system, in which a raw material comprising organic compounds is separated into components, including impurities, and eluted by normal liquid chromatography, and particularly preferably a high-performance liquid chromatography (HPLC) system, and the diamond electrode is used as a detector for quantifying the eluted components, thus carrying out a quantitative electrochemical analysis.

Specifically, the diamond electrode and a counter electrode are contacted with a solution of the eluted HPLC component, a voltage that can cause an oxidation reaction between the diamond electrode and the counter electrode is applied, and the current at this voltage is measured. In this HPLC-ECD method (a method in which measurement is carried out by an ECD having a diamond electrode connected to HPLC), when the main component (effective component) and impurities contained in a test sample are separated and eluted, components are subjected to an oxidation-reduction (redox) reaction by the diamond electrode, and the change in current over time accompanying the redox reaction is detected. The detection results are normally recorded as a group of isolated peaks in which the abscissa is the elution time and the ordinate is the change in current accompanying oxidation-reduction of the eluted component. The peak area is proportional to the amount eluted, and the elution time is characteristic of the component eluted. Identification of a component eluted can be carried out if necessary by separately checking with the elution time of a standard sample. As an alternative method, a component can be directly identified by LC-MS using a mass spectrometer as the detector.

In the present invention, as the liquid chromatography, high-performance liquid chromatography (HPLC) is preferably employed, and since HPLC is a common analytical method its detailed explanation is omitted. For example, 'Kagaku Binran (Handbook of Chemistry)' Ed. by the Chemical Society of Japan, Applied Chemistry I, sixth edition (published by Maruzen in 2003), pp. 342-343 may be referred to. In high-performance liquid chromatography, an absorptiometer (an ultraviolet spectrophotometer (UV)) is widely used as a detector.

The liquid chromatograph (LC) to which the electrochemical detector used in the present invention is connected ranges from a general-purpose LC to a semimicro LC. It is preferable for a cell of the amperometric system to have a capacity of 1 to 10 µL.

With regard to an LC column, a mobile phase, a column temperature, a flow rate, an injection amount, etc., conventionally known materials and conditions may be employed. The electrochemical detector may be used by connecting it in series following a generally used ultraviolet (240 nm, etc.) or visible detector or a refractive index detector, or by replacing such a detector.

In the present invention, an electrochemical detector having a conductive diamond electrode is used as the detector for the liquid chromatography. The electrochemical detector preferably employs an electrochemically stable electrode, and a precious metal electrode such as silver, gold, or platinum, is conventionally used in various types of analyzer. However, conventionally used precious metal electrodes have poor stability, and it is difficult to apply them in a step for determining in advance a maximum permissible amount for an impurity peak and/or a minimum permissible amount for an effective component peak as in the present invention. The conductive diamond electrode is superior to the conventionally used electrodes in terms of stability, detection sensitivity, and the variety of detectable impurities. The conductive diamond electrode is also called simply a 'diamond electrode' in the present specification. Quality inspection preferably employs measurement by a flow injection method using a flow cell.

The conductive diamond electrode has high detection sensitivity and excellent reproducibility and stability compared with the conventional electrodes.

The conductive diamond electrode enables a trace amount of impurity to be detected because of low background current, low noise, and low drift. Due to high detection sensitivity, a sub-µM sample concentration can be detected. Since the potential region (potential window) in which electrolysis of water does not occur is wide, a compound that is conventionally hard to detect can be detected. Since measurement can be carried out at a high potential, a raw material that is difficult to oxidize/reduce can be detected. For example, a sulfur compound such as a thiol or a disulfide can be detected in an aqueous solution system. Furthermore, the time taken for stabilization after starting operation until a measurement can be carried out can be shortened.

Since an oxidation product does not adsorb on the electrode irreversibly, the electrode is stable and has good reproducibility.

Basic specifications for the electrochemical detector are as follows.

Measurement employs an amperometric system, and the electrolysis cell employs as a working electrode the conductive diamond electrode. The counter electrode (reference electrode) is not particularly limited, but a saturated calomel electrode (SCE) may be used, and a silver-silver chloride (Ag/AgCl) electrode is preferably used. As a control electrode, platinum foil is preferably used.

The conductive diamond electrode is preferably subjected to regeneration after being used for measurement a predetermined number of times. This regeneration may be carried out on-line without removing the electrode from the flow cell. Regeneration may preferably be carried out by anodization.

As an example of the electrochemical detector equipped with a diamond electrode that can be used in the present invention, an ED703 electrochemical detector manufactured by GL Sciences Inc. (Shinjuku, Tokyo, Japan) can be cited.

A process for producing a silver halide photosensitive material is explained as a representative example of the present invention.

With regard to a raw material for which normal photographic properties are guaranteed, a maximum permissible amount of impurity and/or a minimum permissible amount of effective component under given analytical conditions are determined by liquid chromatography employing an electrochemical detector using the conductive diamond electrode. That is, stable production can be achieved by use of a raw material in which changes in type and content of a component are restricted to predetermined ranges compared with the component content of a raw material (standard) for which normal photographic properties are guaranteed. In some cases, there might be an abnormality in the photographic properties due to an impurity component that cannot be detected in the standard sample, or the photographic properties might be degraded due to a decrease in the amount of the effective component of the standard sample. In either case, by comparing a chromatogram of at least one standard sample that has a clear correlation with the photographic properties, with a chromatogram of a lot (test sample) of a raw material that is to be used, a raw material that does not cause an abnormality in the photographic properties can be selected by electrochemical detection. By the use of one or more types of these normal photographic raw materials, an intended photographic material can be produced stably. Details are described below.

One of the simplest specific examples of the photographic raw material is an organic solvent. Among alcohols, methyl alcohol (methanol) is used as a solvent that can dissolve many photographic additives. Methanol that is used in the production of a photographic material should not contain any impurity that causes an abnormality in the photographic performance. Contamination might occur during the process of transporting distilled and purified methanol to a photographic factory by several means through a piping system from a distillation vessel. For example, when methanol is transported by tanker or carried in a drum, unexpected contaminants due to dirt from piping or a container, etc. might contaminate the methanol. Conventionally, in a photographic factory, quality is inspected by a coating test, but in accordance with high-performance liquid chromatography employing an electrochemical detector having the conductive diamond electrode of the present invention, a quality inspection with regard to whether or not a contaminant is present during production of a photographic material can be carried out.

Furthermore, in accordance with control of the synthetic reaction and/or purification step employing high-performance liquid chromatography employing an electrochemical detector having the diamond electrode of the present invention, a high quality chemical can be produced. A photographic raw material is preferable as the chemical.

It is conventionally known for a photographic raw material and, in particular, an organic compound, to cause a fault in the photographic characteristics depending on the production lot even when there is no abnormality in normal physical and chemical tests, but the cause thereof is unclear. Photographic faults vary in their severity; examples of less severe cases include (1) a case in which there are spot faults only for a specific product, (2) a case in which an abnormality appears only under limited production conditions for a light-sensitive material (when time has elapsed after dissolution of a silver halide emulsion), and (3) a case in which it is normal for standard use but an abnormality appears in the low illumination intensity sensitivity; the causes of these quality problems are not clear, and in many cases direct countermeasures cannot be taken during production and purification steps of the raw materials.

In the present invention, in accordance with the quality inspection using HPLC-ECD, it has been found that the fault (1) above correlates with the peak of a specific impurity in an antifoggant (AF agent), and it becomes possible to prevent the fault from happening by quantitative analysis of the impurity. It has also been found that the fault (2) above correlates with the amount of a peak due to a specific impurity contained in another AF agent.

When analyzing these occurrences, there is a case in which, although an impurity is present only in a trace amount, since its reducing power is strong, it strongly affects silver halide grains in a photographic material, thus causing a fault. Even if such an impurity is below the detection limit of a UV detector, it can be detected as an impurity by ECD and analyzed quantitatively.

Examples of representative compounds as photographic raw materials to which the present invention can be applied include couplers, color antifoggants, antifading agents, stabilizers/scavengers, dispersants, solvents, ultraviolet degradation inhibitors, surfactants, hardening agents, and filter dyes.

Representative examples of the photographic materials include color papers, color negatives, color reversal materials, materials for a diffusion transfer method, black and white light-sensitive materials, and heat-developable light sensitive materials.

Research Disclosure, Item 40145, pp. 613-650 (September, 1997) gives a list of photographic raw materials and photographic additives. The process of the present invention can be applied to a process of inspecting, accepting, or producing at least one type of the above materials. The present invention can also be applied to a process for producing a photosensitive material using a raw material that has been produced, inspected, or accepted as above.

Production specifications for a photographic material that include a conventional coating test may be changed so as to rely on a test employing the electrochemical detector of the present invention.

In the present invention, with regard to a raw material that can be quality-inspected effectively by HPLC-ECD, there can be cited as an example a photographic raw material for which there is a possibility of contamination with an impurity having oxidation/reduction properties and consequently inhibiting the photographic properties. In particular, it has been found that, since a silver halide photosensitive material is subjected to a development treatment involving selective reduction of silver halide grains having a latent image, even a trace amount of an impurity having reducing properties causes a photographic fault.

The photographic raw material includes raw materials that cannot be dissolved in an organic solvent or a water-based organic solvent, which is a mixture of water and an organic solvent. These raw materials may be subjected to measurement by HPLC-ECD after carrying out an appropriate pretreatment to give a test sample. Examples thereof are described below.

For example, in the case of an aqueous suspension of polymer particles, it may be subjected to centrifugation and only the supernatant may be analyzed. In the case of a solution of a water-soluble polymer, it may be subjected to ultrafiltration and the filtrate may be subjected to measurement. Furthermore, with regard to an oil-soluble raw material, a water extract obtained by water extraction can be subjected to analysis.

The present invention also relates to a process for producing a photographic raw material, and is characterized by controlling a synthetic reaction and/or purification step so that, in an amperometric chromatogram obtained by high-performance liquid chromatography employing an electrochemical detector using a conductive diamond electrode, the amount of an impurity peak is not greater than a predetermined level or an effective component peak is within a predetermined range.

The present invention also relates to a production process comprising a step of determining the usability of a lot, which is a quality-assured unit of a chemical that has been synthesized and/or purified under specified conditions.

The present invention also relates to an inspection process for a photographic raw material, and is characterized by inspecting a photographic raw material so that, in an amperometric chromatogram obtained by high-performance liquid chromatography employing an electrochemical detector using a conductive diamond electrode, the amount of a peak of an impurity that inhibits photographic properties is not greater than a predetermined level or an effective component peak is within a predetermined range.

The present invention also relates to an acceptance process for a photographic raw material, and is characterized by accepting the photographic raw material by inspecting so that, in an amperometric chromatogram obtained by high-performance liquid chromatography employing an electrochemical detector using a conductive diamond electrode, the amount of a peak of an impurity that inhibits photographic properties is not greater than a predetermined level or an effective component peak is within a predetermined range.

The present invention relates to a process for producing a pharmaceutical in accordance with production specifications including detection of an impurity that inhibits health or detection of an effective component by liquid chromatography employing an electrochemical detector.

The present invention also relates to a process for producing a cosmetic in accordance with production specifications including detection of an impurity that inhibits quality or detection of an effective component by liquid chromatography employing an electrochemical detector.

### Examples

The present invention is explained below by way of examples, but the present invention should not be construed as being limited thereby.

In the examples below, as HPLC equipment, a model 10A manufactured by Shimadzu Corporation was used under the conditions below.

### HPLC conditions:

(1) Liquid feed pump: LC10Ai
(2) Autosampler: SIL10Ai
(3) System controller: SCL10A
(4) Column thermostat vessel: CT010Avp
(5) UV detector: SPD10Ai manufactured by Shimadzu Corporation
(6) ECD detector: model ED703 manufactured by GL Sciences Inc.

Measurement was carried out using a separation column, the UV detector, and the ECD connected in series in that order. The separation columns all employed Inertsil ODS-3 with a particle size of 5 µm manufactured by GL Sciences Inc., the inner diameter was 4.6 mm, and the length was selected from 150 mm and 250 mm. The column temperature was 40°C. The eluent flow rate was always 1 mL/min. The electrode temperature for ECD was always 35°C.

Examples employing the ECD detector are illustrated below.

### Example 1

An antifoggant AF1 (structural formula is shown below), which is a photographic raw material, was subjected to an HPLC-ECD measurement under the conditions below. 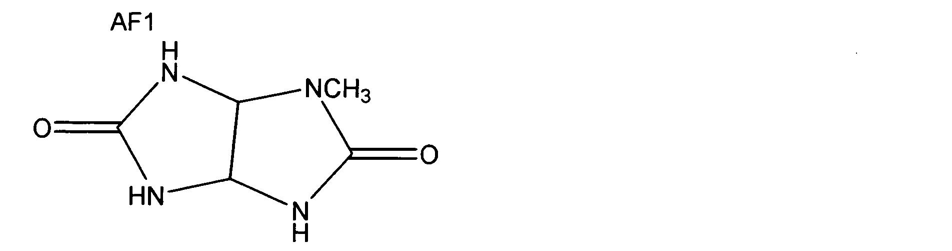 Column size: 4.6 mm internal diameter × 250 mm long
Eluent : 0.05% aqueous solution of phosphoric acid
Test solution: 25 mg of sample dissolved in 5 mL of eluent, and 5 µL thereof injected.
ECD conditions: applied voltage 1.2 V vs Ag/AgCl
UV detection conditions: detection wavelength 200 nm

In a chromatogram obtained by the ECD connected to the HPLC (hereinafter, also called an HPLC-ECD chromatogram), a peak due to an impurity that inhibited the photographic properties (spot fault in color reversal film) was observed at a retention time of 3.99 minutes. By using AF1 free of this impurity peak a normal color reversal film (ISO100) free of faults could be produced.

### Example 2

An antifoggant AF2 (structural formula is shown below), which is a photographic raw material, was subjected to an HPLC-ECD measurement under the conditions below. 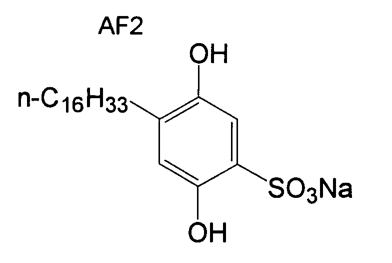 Column size: 4.6 mm internal diameter × 150 mm long
Eluent : A/B/C = 150/50/1 (ratio by volume) mixed liquid
A: acetonitrile
B: an aqueous solution containing 0.03 M tetramethylammonium chloride and 0.03 M potassium dihydrogen phosphate
C: phosphoric acid
Test solution: 5 mg of sample dissolved in 4 mL of eluent, and 2 µL thereof injected.
ECD conditions: applied voltage 1.2 V vs Ag/AgCl
UV detection conditions: detection wavelength 200 nm

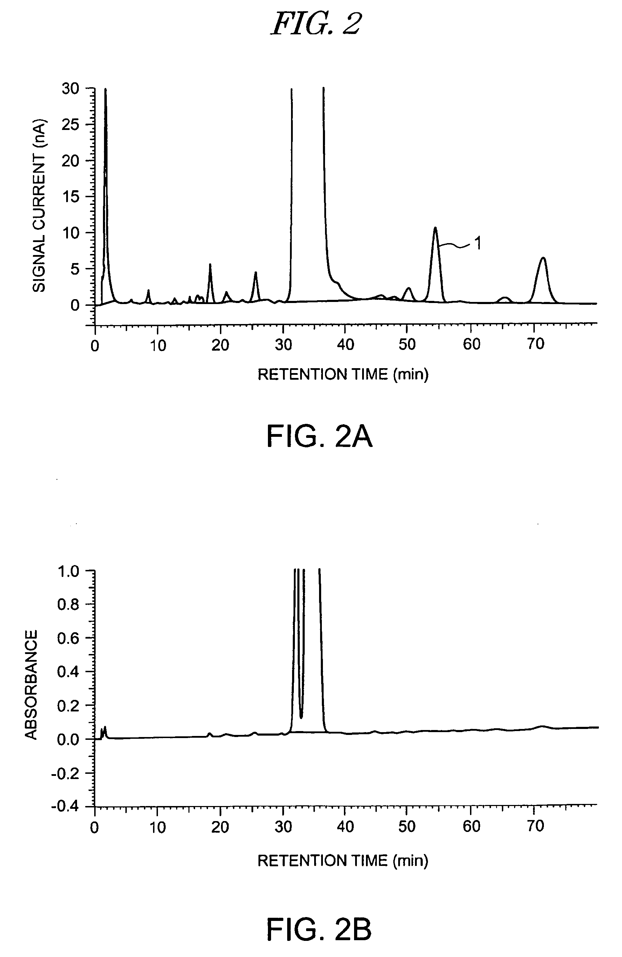

A peak appearing at a retention time of 54.35 minutes in the HPLC-ECD chromatogram corresponded to an impurity that inhibited the photographic properties (spot fault in color reversal film) (see FIG. 2A). The UV detector could not detect this peak (see FIG. 2B). By using AF2 free of this impurity peak a normal color reversal film (ISO100) free of faults could be produced.

### Example 3

An antifoggant AF3 (structural formula is shown below), which is a photographic raw material, was subjected to an HPLC-ECD measurement under the conditions below. 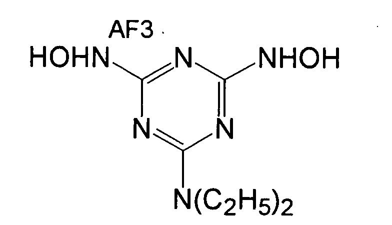 Column size: 4.6 mm internal diameter × 150 mm long
Eluent : A/B/C = 50/50/0.2 (ratio by volume) mixed liquid
A: acetonitrile
B: water
C: phosphoric acid
Test solution: 50 mg of sample dissolved in eluent to give a total of 50 mL, and 10 µL thereof injected.
ECD conditions: applied voltage 1.2 V vs Ag/AgCl
UV detection conditions: detection wavelength 200 nm

In the HPLC-ECD chromatogram, a peak of an impurity that inhibited the photographic properties (abnormal sensitivity in photographic properties) was observed at a retention time of 3.15 minutes. By using AF3 free of this impurity peak, a normal color negative film (ISO400) free of faults could be produced.

### Example 4

An antifoggant AF4 (structural formula is shown below), which is a photographic raw material, was subjected to an HPLC-ECD measurement under the conditions below. 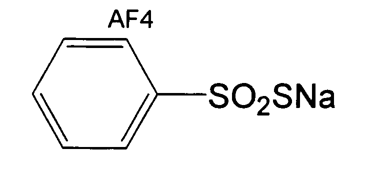 Column size: 4.6 mm internal diameter × 150 mm long
Eluent : A/B/C = 70/30/0.2 (ratio by volume) mixed liquid
A: acetonitrile
B: water
C: phosphoric acid
Test solution: 50 mg of sample dissolved in eluent to give a total of 50 mL, and 10 µL thereof injected.
ECD conditions: applied voltage 1.05 V vs Ag/AgCl
UV detection conditions: detection wavelength 254 nm

In the HPLC-ECD chromatogram, a peak due to an impurity that inhibited the photographic properties (sensitivity fault in emulsion production) was observed at a retention time of 6.91 minutes. By using AF4 free of this impurity peak a normal color reversal film (ISO100) free of faults could be produced.

### Example 5

Methanol, which is solvent used in photographic production, was subjected to an HPLC-ECD measurement under the conditions below.
Column size: 4.6 mm internal diameter × 150 mm long
Eluent : A/B/C = 80/20/0.2 (ratio by volume) mixed liquid
A: acetonitrile
B: water
C: phosphoric acid
Test solution: 10 µL of sample directly injected.
ECD conditions: applied voltage 1.2 V vs Ag/AgCl
UV detection conditions: detection wavelength 210 nm

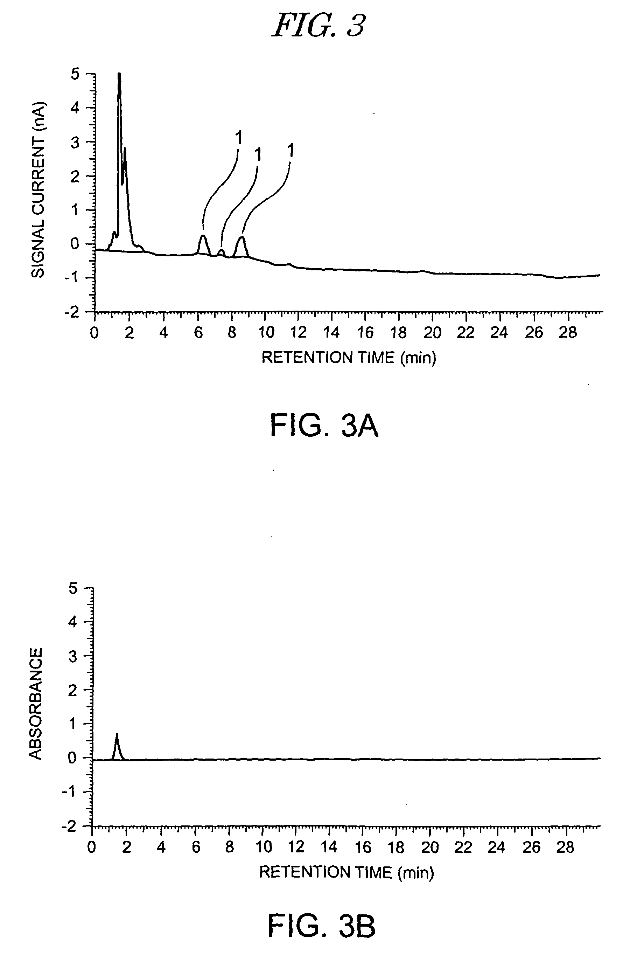

Three peaks appearing in a retention time range of 6.31 to 8.57 minutes observed in the HPLC-ECD chromatogram corresponded to impurities that inhibited the photographic properties (fogging fault) (see FIG. 3A). As a comparative example, a chromatogram from a UV detector connected to the same HPLC is shown in FIG. 3B.

By using methanol free of these impurity peaks a normal color reversal film (ISO100) free of faults could be produced.

### Example 6

A coupler 1 (structural formula is shown below), which is used for photographic production, was subjected to an HPLC-ECD measurement under the conditions below. 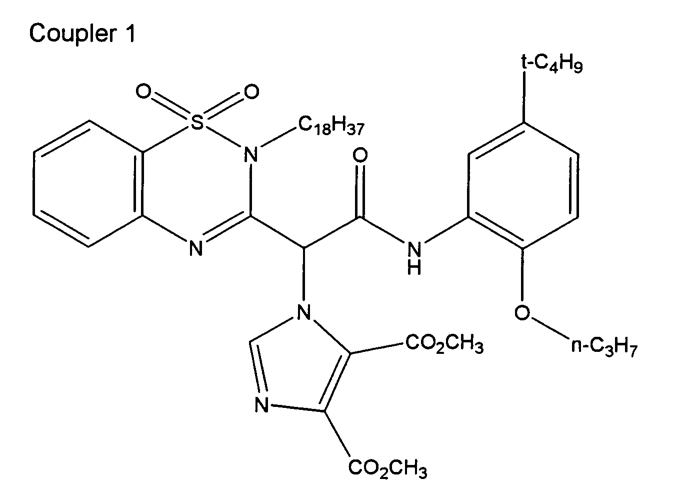 Column size: 4.6 mm internal diameter × 150 mm long
Eluent : A/B/C/D = 950/50/2/2 (ratio by volume) mixed liquid
A: acetonitrile
B: water
C: acetic acid
D: phosphoric acid
Test solution: 15 mg of sample dissolved in eluent to give a total of 50 mL, and 10 µL thereof injected.
ECD conditions: applied voltage 1.5 V vs Ag/AgCl
UV detection conditions: detection wavelength 254 nm

In the HPLC-ECD chromatogram, a peak due to an impurity that inhibited the photographic properties (fogging fault) was observed at a retention time of 13.89 minutes. By using Coupler 1 free of this impurity peak a normal color reversal film (ISO100) free of faults could be produced.

### Example 7

An ultraviolet absorbing agent UV-1 (structural formula is shown below), which is a photographic raw material, was subjected to an HPLC-ECD measurement under the conditions below.

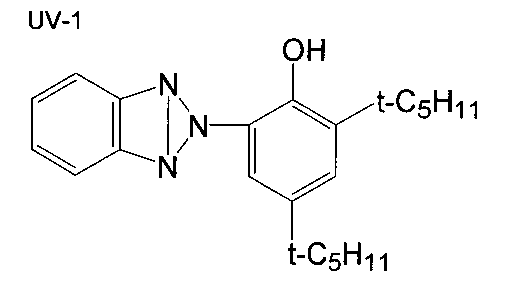

### HPLC-ECD conditions

Column size: 4.6 mm internal diameter × 250 mm long
Eluent : A/B/C = 990/10/2 (ratio by volume) mixed liquid
A: acetonitrile
B: water
C: phosphoric acid
Test solution: 25 mg of sample dissolved in 1 mL of ethyl acetate, acetonitrile added to give a total of 100 mL, and 10 µL thereof injected.
ECD conditions: applied voltage 1.2 V vs Ag/AgCl
UV detection conditions: detection wavelength 210 nm

### Representative HPLC Profile

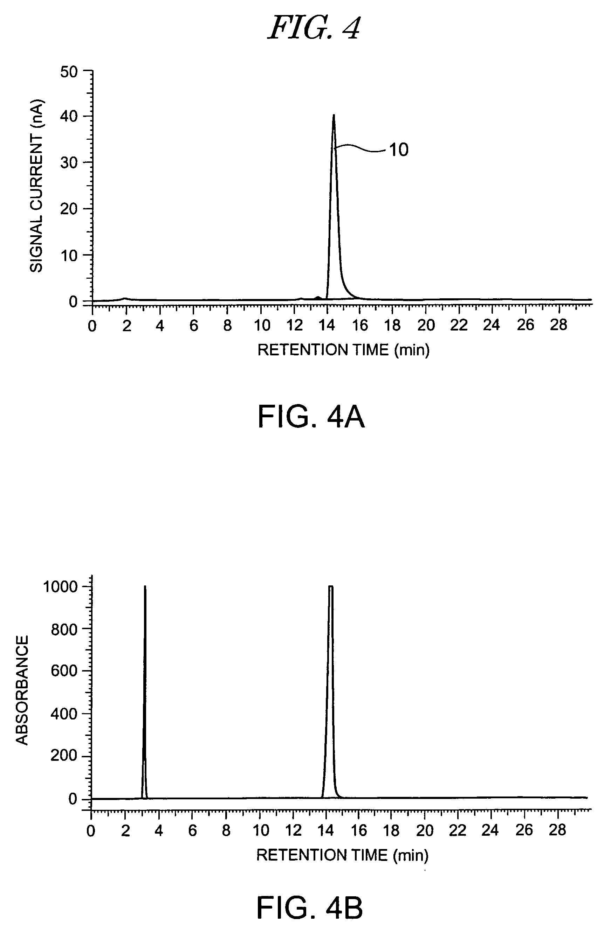

FIG. 4 shows representative ECD (A) and UV (B) HPLC profiles of UV-1.

The component at a retention time of 14.4 minutes in FIG. 4A is the main component, and when the ratio of the main component among components eluted after 3 minutes based on integrated area was 96% or higher in the HPLC-ECD chromatogram, good photographic performance was exhibited. By using UV-1 having a main component ratio of 96% or higher, a normal color paper free of faults could be produced.

### Example 8

An ultraviolet absorbing agent UV-2 (structural formula is shown below), which is a photographic raw material, was subjected to a measurement under the conditions below.

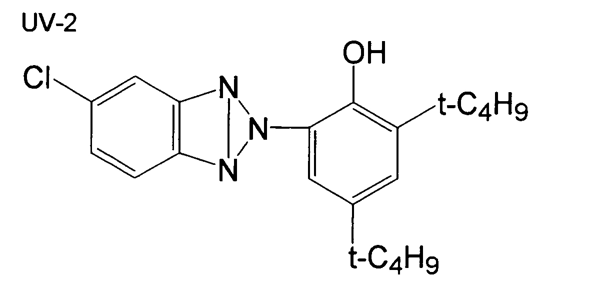

### Extraction Conditions

A 5g sample of UV-2 was dissolved in 50 mL of chloroform at room temperature while stirring for about 10 minutes. At the same room temperature, 10 mL of a 0.2% aqueous solution of phosphoric acid was added to this UV-2 solution, and the mixture was stirred vigorously for 30 minutes.

The mixture was subsequently allowed to stand at room temperature for 1 hour so as to separate into a chloroform phase and an aqueous phase, and as an HPLC analysis test sample a part was sampled from the aqueous phase, which was the upper phase, using a pipette.

### HPLC-ECD Conditions

Column size: 4.6 mm internal diameter × 250 mm long
Eluent : 0.2% aqueous solution of phosphoric acid
Test solution: 10 µL of test sample described in Extraction Conditions above injected.
ECD conditions: applied voltage 1.2 V vs Ag/AgCl
UV detection conditions: detection wavelength 210 nm

### Representative HPLC Profile

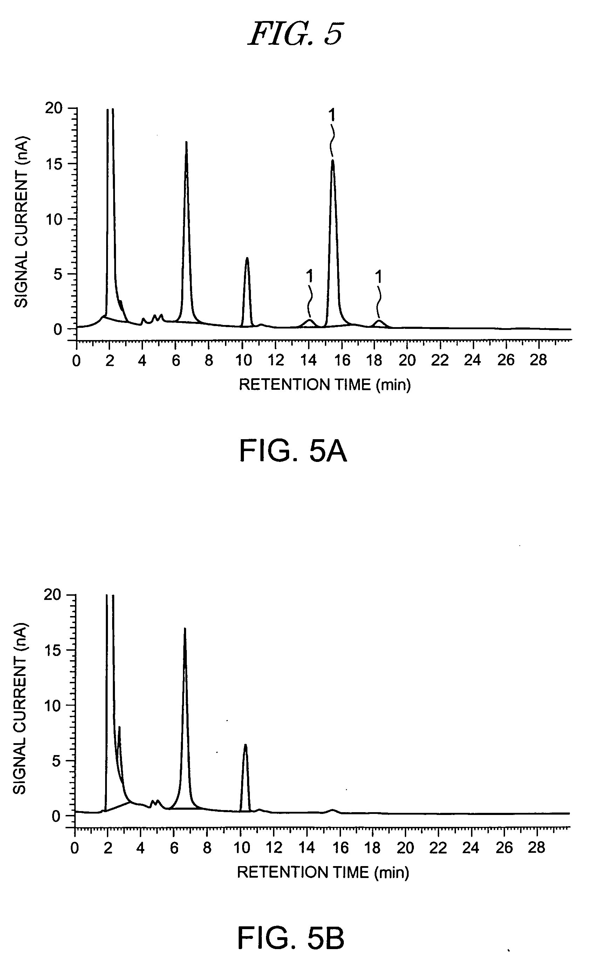

FIG. 5 shows HPLC-ECD profiles of (A) a water extract of UV-2 containing a component that degrades photographic sensitivity and (B) a water extract of UV-2 that does not affect the photographic sensitivity.

Three components appearing after a retention time of 13 minutes in the chromatogram of (A) corresponded to components that degraded the sensitivity (sensitivity fault in color paper). By using UV-2 free of these impurity peaks, a color paper without a degradation in sensitivity could be produced.

### Example 9

Unpurified and purified cyan coupler CP-2 (structural formula is shown below), which is a photographic raw material, was subjected to a measurement under the conditions below.

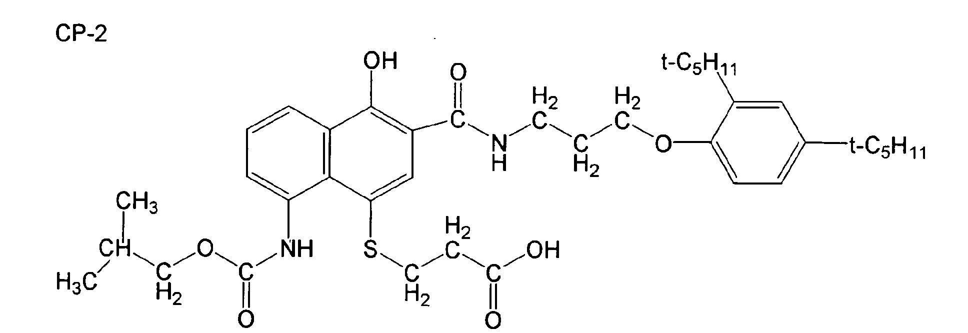

### Purification Conditions

35 g of unpurified crystals (A) were sampled, added to 90 mL of ethanol, and dissolved while heating. Subsequently, 700 mL of hexane was added thereto, the mixture was cooled, and crystals thus precipitated were collected by filtration to give sample (B).

### HPLC-ECD Conditions

Column size: 4.6 mm internal diameter × 250 mm long
Eluent : A/B/C=900/100/4
A: acetonitrile
B: water
C: phosphoric acid
Test solution: 10 mg of (A) or (B) dissolved in 50 mL of eluent, and 10 µL thereof injected.
ECD conditions: applied voltage 0.8 V vs Ag/AgCl
UV detection conditions: detection wavelength 254 nm

### Representative HPLC Profile and Correlation with Photographic Performance

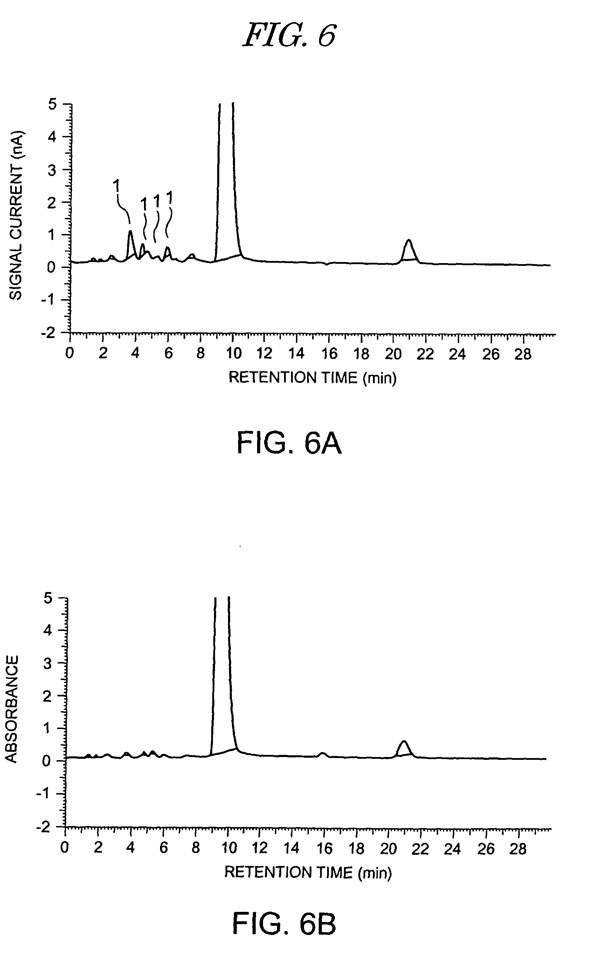

FIG. 6 shows HPLC-ECD profiles of (A) unpurified crystals of CP-2 containing components that degrade the photographic sensitivity and (B) a standard from which the components that degrade photographic sensitivity had been removed by purification.

Four components appearing in a retention time range of 3.6 minutes to 7.4 minutes in the chromatogram of (A) corresponded to components that degraded the photographic sensitivity (sensitivity fault in color negative sensitive material). The difference in retention time could not be detected by UV detection. By using CP-2 that had been subjected to the present purification process, a color negative sensitive material having good sensitivity could be produced.

Quality inspection of the chemicals of Examples 1 to 9 could be carried out as a shipment inspection and/or an acceptance inspection. Furthermore, a step of determining the usability of the chemicals of Example 1 to 9 could be carried out in production of the chemical product as a shipment inspection by a supplier of the chemical and/or as an acceptance inspection of the chemical products by a production factory.

### Example 10

A surfactant W-1 (a mixture represented by structural formulae A and B), which is a cosmetic raw material, was subjected to an HPLC-ECD measurement under the conditions below. 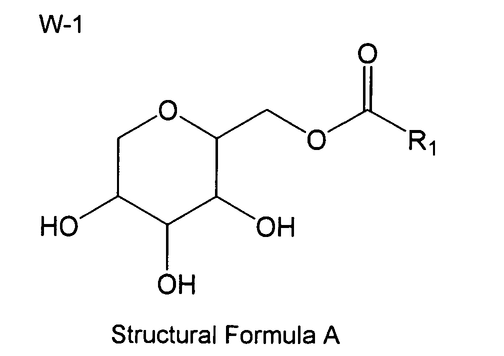 R₁ : alkyl group having 9 to 13 carbons 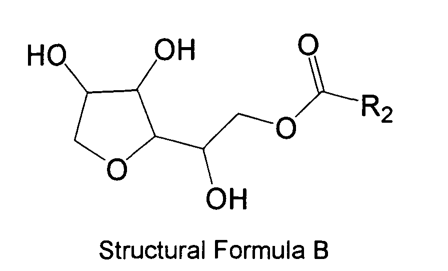 R₂: alkyl group having 9 to 13 carbons

### HPLC-ECD Conditions

Column size: 4.6 mm internal diameter × 250 mm long
Eluent : A/B = 1000/2 (ratio by volume) mixed liquid
A: methanol
B: phosphoric acid
Test solution: 0.5 g of sample dissolved in methanol to give a total of 50 mL, and 10 µL thereof injected.
ECD conditions: applied voltage 1.6 V vs Ag/AgCl
UV detection conditions: detection wavelength 220 nm

### Skin Sensitization Test

Carried out by a GPMT method (guinea pig maximization test) in accordance with OECD guidelines (OECD TG406).

### Representative HPLC Profile

In the HPLC-ECD chromatogram, two peaks were observed at a retention time of in the vicinity of 3.7 minutes, and it was found that the greater the amount of these components, the stronger the skin sensitization. In accordance with the HPLC-ECD method, skin sensitization of the surfactant could be evaluated quickly.

### Example 11

An ultraviolet absorbing agent UV-3 (structural formula is shown below), which is a paint or cosmetic raw material, was subjected to an HPLC-ECD measurement under the conditions below.

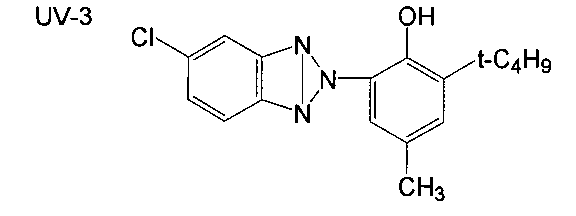

### HPLC-ECD Conditions

Column size: 4.6 mm internal diameter × 250 mm long
Eluent : A/B/C = 990/10/2 (ratio by volume) mixed liquid
A: acetonitrile
B: water
C: phosphoric acid
Test solution: 25 mg of sample dissolved in 1 mL of ethyl acetate, acetonitrile added to give a total of 100 mL, and 10 µL thereof injected.
ECD conditions: applied voltage 1.4 V vs Ag/AgCl
UV detection conditions: detection wavelength 210 nm

### Skin Sensitization Test

A skin sensitization test was carried out by the aforementioned method.

### Representative HPLC Profile

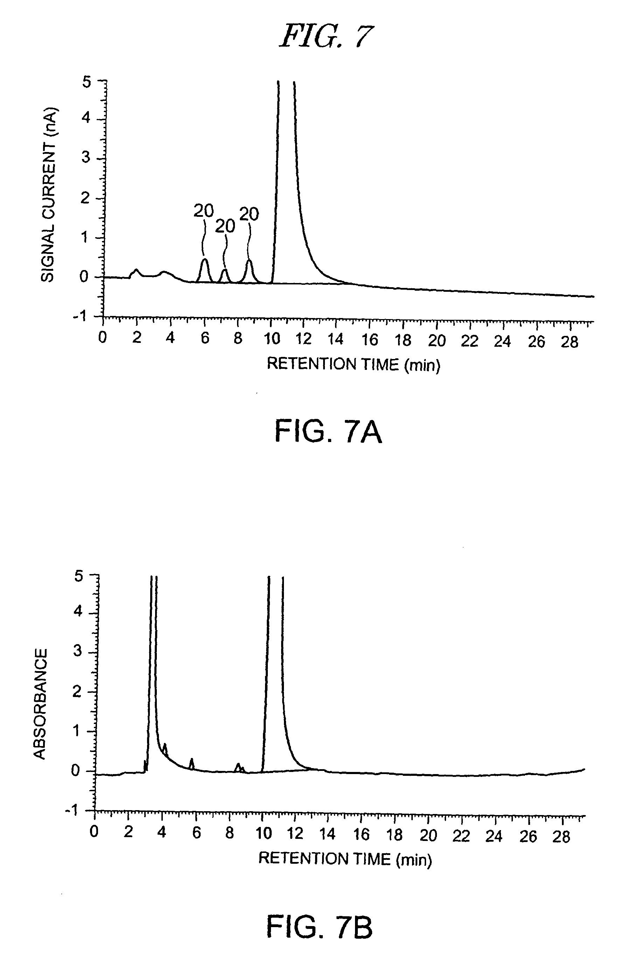

FIG. 7 shows representative ECD (A) and UV (B) HPLC profiles of UV-3.

The stronger the intensity of three component peaks appearing in a retention time range of 5 to 9 minutes observed in the chromatogram of FIG. 7A, the stronger the skin sensitization.

By using the HPLC-ECD method, the skin sensitization of the raw material could be evaluated quickly.

## Claims

1. A process for producing a chemical product from one or more chemicals, the process comprising:
a step of determining in advance a maximum permissible amount of an impurity peak and/or a minimum permissible amount of an effective component peak under given analytical conditions for at least one of the chemicals by means of liquid chromatography employing an electrochemical detector having a conductive diamond electrode; and
a step of determining the usability of a lot of the chemical by subjecting the lot to a measurement by liquid chromatography under the above-mentioned analytical conditions based on an amount of the impurity peak and/or an amount of the effective component peak of the lot.

2. The process for producing a chemical product according to Claim 1, wherein the chemical product is a silver halide photosensitive material.

3. The process for producing a chemical product according to Claim 1 or Claim 2, wherein the process comprises a step of determining the usability of a lot of the chemical that has been synthesized and/or purified under specified conditions.

4. The process for producing a chemical product according to Claim 1, wherein the two steps are carried out using a test sample that is obtained by pretreating the chemical.

5. The process for producing a chemical product according to any one of Claim 1 to Claim 4, wherein the chromatography employs an amperometric system.

6. A process for producing a chemical, the process comprising:
a step of determining in advance a maximum permissible amount of an impurity peak and/or a minimum permissible amount of an effective component peak by liquid chromatography employing an electrochemical detector having a conductive diamond electrode under given analytical conditions for the chemical; and
a step of subjecting the chemical to a measurement by liquid chromatography under the above-mentioned analytical conditions;
wherein a step of a synthetic reaction and/or purification of the chemical is controlled based on an amount of the impurity peak and/or an amount of the effective component peak of the chemical.

7. The process for producing a chemical according to Claim 6, wherein the chemical is a photographic raw material.

8. A quality inspection process for a chemical, the quality inspection process comprising:
a step of preparing a conductive diamond electrode and a counter electrode;
a step of subjecting a chemical to liquid chromatography so as to separate and elute a component;
a step of contacting the component eluted by liquid chromatography with the conductive diamond electrode and the counter electrode;
a step of applying a voltage for causing an oxidation reaction between the conductive diamond electrode and the counter electrode; and
a step of measuring a current at said voltage.

9. The quality inspection process for a chemical according to Claim 8, the process comprising:
a step of determining in advance a maximum permissible amount of an impurity peak and/or a minimum permissible amount of an effective component peak by liquid chromatography employing an electrochemical detector having a conductive diamond electrode under given analytical conditions for the chemical; and
a step of subjecting a lot of the chemical to a measurement by liquid chromatography under the above-mentioned analytical conditions and determining the quality of the lot based on an amount of the impurity peak and/or an amount of the effective component peak of the lot.

10. The quality inspection process for a chemical according to Claim 8 or Claim 9, wherein the chemical is a chemical used in a step of producing a silver halide photosensitive material.

11. A chemical subjected to quality inspection by the quality inspection process according to any one of Claim 8 to Claim 10.

12. A chemical product produced using one or more chemicals according to Claim 11.
